# EUROPEAN PATENT SPECIFICATION

(11) **EP 0 898 039 B1**
(45) Date of publication and mention of the grant of the patent: **18.12.2002**
(21) Application number: 98115449.5
(22) Date of filing: 17.08.1998
(51) Int. Cl.: E05F 15/16, E05F 15/20, B60J 1/17, B60R 16/02, H02P 7/00

(54) **Power window apparatus for a vehicle**
Motorisch angetriebener Fensterheber für ein Kraftfahrzeug
Lève-vitre à moteur pour véhicule automobile

(30) Priority: 18.08.1997 JP 25743597
(43) Date of publication of application: 24.02.1999
(73) Proprietor: TOYO DENSO KABUSHIKI KAISHA, Minato-ku Tokyo (JP)
(72) Inventor: Ohashi, Nobuaki, Tsurugashima-shi, Saitama (JP)
(74) Representative: Prechtel, Jörg, Dipl.-Phys. Dr.

(56) References cited:
- DE-U- 29 617 425
- US-A- 4 328 451
- US-A- 4 562 387
- US-A- 4 575 662
- US-A- 4 678 975
- US-A- 4 683 975
- PATENT ABSTRACTS OF JAPAN vol. 095, no. 011, 26 December 1995 & JP 07 230736 A (SHIGETOSHI MATSUZUKA), 29 August 1995
- PATENT ABSTRACTS OF JAPAN vol. 096, no. 012, 26 December 1996 & JP 08 203399 A (MATSUZUKA SHIGETOSHI), 9 August 1996

## Description

### BACKGROUND OF THE INVENTION

The present invention relates to a power-window apparatus of a vehicle, which can open and close a door window by a motor-driven mechanism.

A conventional power-window apparatus is operated by using an automatic reset type power-window switch in two steps. The first step (manual mode) operation of the switch in the direction of opening or closing the window energizes a window-opening relay or a window-closing relay through contact of which a forward (positive) or inverse driving voltage is applied to a motor which rotates in a forward or reverse direction to move down or up the window glass to a desired extent. The second-step (temporary automatic mode) operation of the power-window switch in the window opening or closing direction actuates an auto-latching circuit for maintaining the window-opening or closing relay in energized state to enable the motor to continue forward or reverse rotation until the window glass moves down or up to the full limit.

The conventional power-window apparatus for a vehicle, however, involves the following important problem.

The power-window apparatus having an auto-latching circuit normally works by energizing either the window-opening relay or the window-closing relay to apply a forward or inverse driving voltage to a driving motor of the power window mechanism depending upon the operation mode of the power window switch. However, in an accident of, e.g., the vehicle sinking into water, a control system of the auto-latching circuit may happen to energize both the relays, resulting in that the motor cannot rotate and the window cannot be open or shut by manipulating the power window switch.

The problem is serious because a person or persons cannot escape from the vehicle sinking into water if a driver cannot open any door window by the motor by manipulating the power-window switch.

US 4678975 discloses a power window apparatus according to the preambles of claims 1 and 2.

### SUMMARY OF THE INVENTION

Accordingly, an object of the present invention is to provide a power-window apparatus for a vehicle, which apparatus works by energizing either a window-opening relay or a window-closing relay to apply a forward or inverse driving voltage to a driving motor of the power window mechanism depending upon the operating direction of the power-window switch and by holding the relay in its energized state, and which apparatus is capable that, in an accident (e.g., vehicle sinking into water) with occurrence of abnormal simultaneous energization of both the window-opening and window-closing relays due to the abnormal operation of the auto-latch control system, to actuate in synchronism with manual operation of the power window switch and break an auto-latch control circuit of the window closing relay by short-circuiting the relay coil, thus enabling the window to be opened by the motor.

The object is achieved by a power window apparatus according to claims 1 and 2.

### BRIEF DESCRIPTION OF THE DRAWINGS

- Fig. 1: is a circuit diagram showing an exemplified structure of a standard electric circuit system of a conventional power window apparatus.
- Fig. 2: is a circuit diagram showing an exemplified structure of an electric circuit system of a power window apparatus according to an aspect of the present invention.
- Fig. 3: is a circuit diagram showing an exemplified structure of an electric circuit system of a power window apparatus according to another aspect of the present invention.
- Fig. 4: is a circuit diagram showing an exemplified structure of an electric circuit system of a power window apparatus according to a further aspect of the present invention.

### DESCRIPTION OF THE PREFERRED EMBODIMENTS

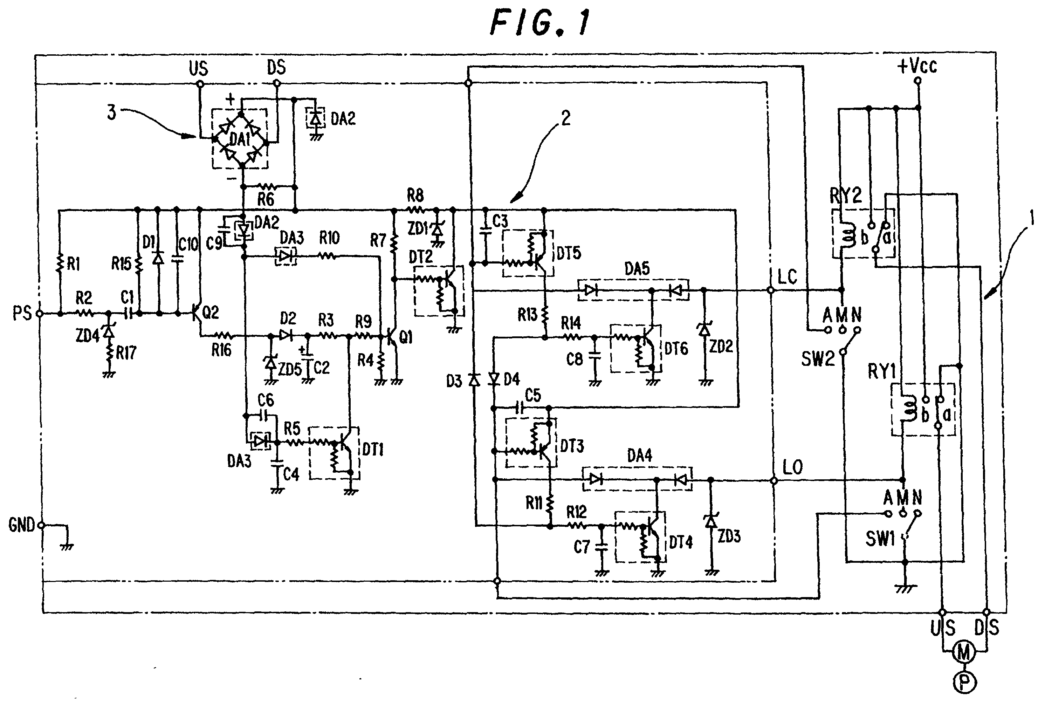

Fig. 1 is a usual circuit diagram showing circuit arrangements of a conventional power window apparatus. The circuit configuration includes:
a drive control circuit 1 for driving a motor M of the door-window mechanism (not shown) into the forward or reverse rotation to open or close the window during the first-step (manual mode) operation of an automatic reset type compound power-window switch in the direction of opening or closing the window; an auto-latching circuit 2 for continuing the forward or reverse rotation of the DC motor M under the control of the drive control circuit 1 until the window is full opened or closed after the second-step (temporary automatic mode) operation of the power-window switch in the direction of opening or closing the window; and a power supply circuit 3.

The operation of the drive control circuit 1 is as follows:

When the power window switch is operated in the manual mode in the direction of opening the window, a window-opening switch SW1 closes its contact M to energize a window-opening relay RY1, thereby a driving voltage +Vcc is applied in the forward direction to the motor M through a contact (b) of the energized window-opening relay RY1 and a contact (a) of a deenergized window-closing relay RY2. The motor M is driven in forward rotation. When the power window switch is operated in the manual mode in the direction of closing the window, a window-closing switch SW2 closes its contact M to energize the window-closing relay RY2 and apply a driving voltage +Vcc in the inverse direction to the motor M through a contact (b) of the energized window-closing relay RY2 and a contact (a) of the deenergized window-opening relay RY1. Thus, the motor M is driven in reverse rotation.

The operation of the auto-latching circuit 2 is as follows:

When the power window switch is operated in the automatic mode in the direction of opening the window, the window-opening switch SW1 closes first its contact M and then temporary closes its contact A and the power supply circuit 3 has an output voltage to turn on transistor switches DT3 and DT4 of the auto-latching circuit 2 (with a transistor switch DT2 turned off). At a low level of a window-opening latch line LO the window-opening relay RY1 is energized and the motor M continues its rotation in the forward direction.

In synchronism with rotations of the motor M, the pulser P generates pulse signals PS to be given to the auto-latching circuit 2.

With the pulse signal PS on the auto-latching circuit 2, the transistor switch DT2 is turned off and the switch SW1 is reset to the neutral position. The transistor switches DT3 and DT4 are held in ON state, so the window opening relay RY1 is energized and the motor continues its forward rotation.

When the motor M stops with the window full opened, the pulse PS will not be given to the auto-latching circuit and the transistor switch DT2 is turned on. At the same time, transistor switches DT3 and DT4 are turned off and the window-opening latch line LO attains a high level to deenergize the window-opening relay RY1 and remove the voltage +Vcc from the motor M.

When the power-window switch is operated in the automatic mode in the direction of closing the window, the window-opening switch SW2 closes its contact M first and then temporally closes its contact A, thereby the power supply circuit 3 has an output voltage to turn on transistor switches DT5 and DT6 of the auto-latching circuit 2 (with a transistor switch DT2 turned off). At a low level of a window-opening latch line LC, the window-closing relay RY2 is energized and the motor M is driven into reverse rotation.

With the pulse signal PS on the auto-latching circuit 2, the transistor switch DT2 remains turned off and the switch SW1 is reset to the neutral position N. The transistor switches DT5 and DT6 are held in ON state, thereby the window closing relay RY2 is energized to keep the motor being rotating in the reverse direction.

When the motor M stops with the window full closed, the pulse PS will not be given to the auto-latching circuit 2 and the transistor switch DT2 is turned on. At the same time, transistor switches DT5 and DT6 are turned off and the window-opening latch line LO attains a high level to deenergize the window-closing relay RY2 and remove the voltage +Vcc from the motor M.

In the event of the vehicle having an accident of, e.g., sinking into water, the above power window apparatus may have the auto-latching circuit 2 short-circuited to drop levels of both the window-opening and window-closing latch lines LO and LC, so both the window-opening and window-closing relays RY1 and RY2 are energized at a time, making it impossible to drive the motor M by the power window switch.

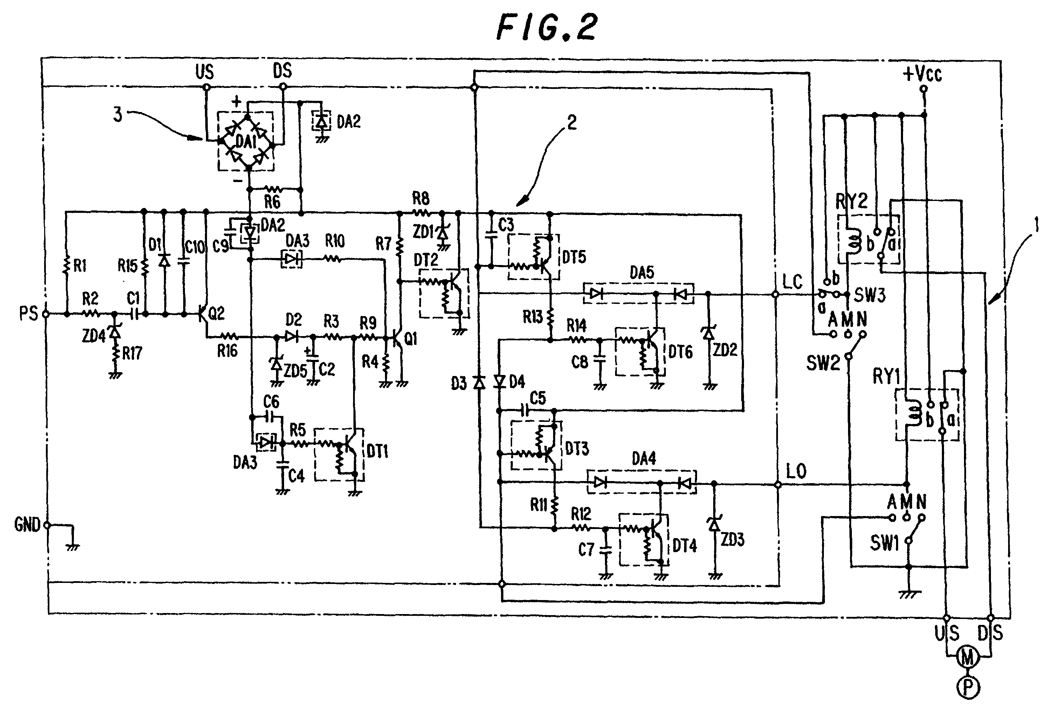

Accordingly, the present invention provides the power window apparatus with a switch SW3 shown in Fig. 2, which switch actuates simultaneously with the manual operation of the power-window switch in the direction of opening the window and forcibly cuts off the window-closing latch line LC in the auto-latching circuit 2 to make the window-closing relay RY2 short-circuited.

The power window apparatus provided with the above-described switch is capable of opening a vehicle door-window by manipulating the power window switch in the window-opening direction even if auto-latching circuit 2 is short-circuited and both the window-opening and window-closing relays RY1 and RY2 are simultaneously energized in an accident of a vehicle sinking into water. This is realized by the switch SW3 that actuates simultaneously with the manual operation of the window opening switch SW1 and cuts off the window-closing latch line LC being at an abnormally low level to deenergize the window-closing relay RY2. Consequently, only window-opening relay RY1 is held in energized state and the motor M is driven into forward rotation for opening the door window.

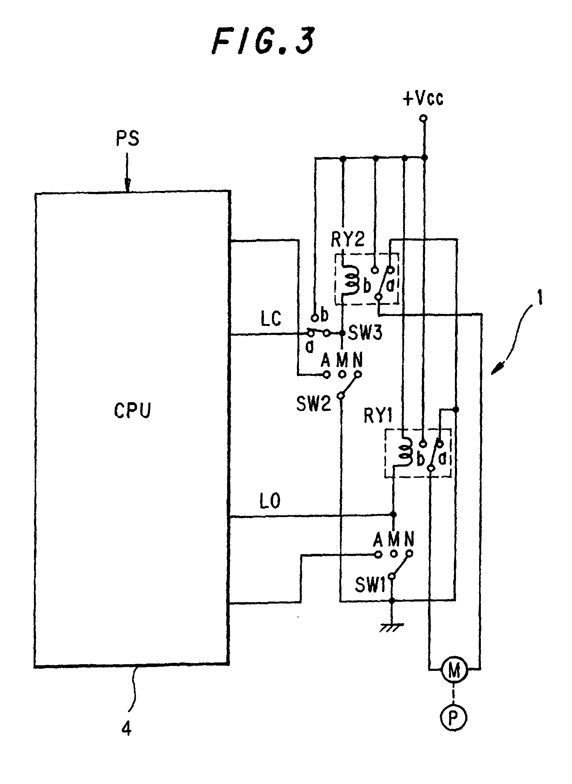

Fig. 3 illustrates another embodiment of the present invention.

In this embodiment, a control unit 4 that is a central processing unit (CPU) for executing centralized control of vehicle door-related operations (e.g., for opening and closing respective door windows, switching ON and OFF door locks, turning ON and OFF door lamps and adjusting a power-driven mirror) can also perform auto-latching function of the power-window and is further provided with a switch SW3 that can actuate simultaneously with the manual operation of a power window switch and makes a window-closing relay coil short-circuited by disconnecting a control circuit for energizing the window-closing relay in the control unit (CPU) 4.

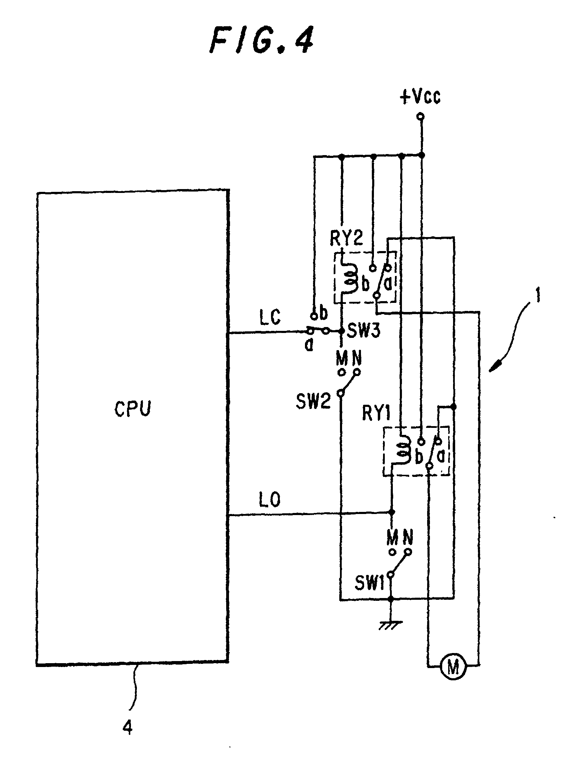

Fig. 4 illustrates a further embodiment of the present invention.

This embodiment is applied in particular to a power-window apparatus intended to operate a window-opening switch SW1 and a window-closing switch SW2 in a manual mode only and has not an auto-latching function. Namely, the power-window apparatus according to the embodiment can open and close a window of a vehicle during the manual operation of the window-opening switch SW1 and the window-closing switch SW2 respectively and also by energizing a window-opening relay RY1 and a window-closing relay RY2 respectively under the control of a control unit (CPU) 4 for executing concentrated control of vehicle door-related functions (e.g., opening/closing respective door-windows, switching ON and OFF door locks, turning ON and OFF door lamps and adjusting a power-driven mirror) and is further provided with a switch SW3 that can actuate simultaneously with the manual operation of a power window switch in the window-opening direction to short a window-closing relay coil by disconnecting a control line for energizing the window-closing relay in the control unit (CPU) 4.

In practice, a plurality of the power-window apparatuses may be provided one for each of the door-windows (e.g., an assistant-seat-side door-window and the back-seat-side door-widows) of the vehicle and all the power-window switches are arranged on an operation panel in front of the driver's seat. When the driver manually operates any power-window switch, a command signal is produced and sent to the control unit (CPU) 4 which in turn executes the control operation for opening or closing a designated window.

Similarly to the embodiment described with reference to Fig. 2, both the embodiments of Figs. 3 and 4 are capable of opening a door-window by manually operating the power-window switch in the window opening direction even if the control unit (CPU) 4 is short-circuited causing simultaneous actuation of window-opening and closing relays RY1 and RY2 in a motor-drive control circuit 1 in an accident of, e.g., the vehicle sinking into water. This is realized by the effect of a switch SW3 that in the same case actuates with the manual operation of the power-window switch in the window-opening direction and disconnects the window-closing holding line LC being at an abnormal low-level in the control unit (CPU) 4 and deenergizes the window-closing relay RY2 to drive the motor M in the forward direction.

As described above, the power-window apparatus according to an aspect of the present invention is capable of opening or closing a door window of a vehicle by manual operation of a power-window switch energizing either of the relays for rotating a motor in a forward or reverse direction and by automatic operation of the power window switch to cause an auto-latching circuit or a control unit (CPU) to energize and maintain either of the relays in the energized state until the door window becomes full opened or closed, and is further provided with a switch that can actuate simultaneously with the manual operation of the power-window switch in the window-opening direction and deenergizes a coil of the window-closing relay by disconnecting the control circuit of latching the energized window-closing relay. The provision of the switch can surely eliminate the abnormal simultaneous actuation of both the window-opening and window-closing relays due to the abnormal operation of auto-latching control system in an accident (e.g., when the vehicle is sinking into water), thus enabling the motor to open the window. This switch can be added to an existing electric circuit system of the power-window apparatus without providing any special control circuit.

The power-window apparatus according to another aspect of the present invention is capable of opening or closing a door window of a vehicle by manual operation of a power-window switch energizing either of the relays for rotating a motor in a forward or reverse direction and by automatic operation of the power window switch to cause a control unit (CPU) to maintain either of the relays in energized state for the forward or reverse rotation of the motor, and is further provided with a switch that can actuate simultaneously with the manual operation of the power-window switch in the window-opening direction and deenergizes a coil of the window-closing relay by breaking the control circuit of latching the energized window-closing relay. The abnormal simultaneous actuation of both the window-opening and window-closing relays due to the abnormal operation of auto-latching control system in an accident (e.g., when the vehicle is sinking into water) can be surely eliminated by the effect of the switch that can be added to an existing electric circuit system of the power-window apparatus without providing any special control circuit, thus enabling opening the window.

## Claims

1. A power window apparatus being capable of opening or closing a window by manual operation of a power-window switch (SW1, SW2) in a window-opening or closing direction, said operation energizing a window-opening relay (RY1) or a window-closing relay (RY2) to drive a motor (M) of a power-window mechanism into forward or reverse rotation for opening or closing the window during the manual operation and by temporary automatic operation of the power-window switch (SW1, SW2) in the window-opening or closing direction, said operation causing an auto-latching circuit (2) to be turned-on for holding the window-opening relay (RY1) or the window-closing relay (RY2) in the energized state to keep the forward or reverse rotation of the motor until the window becomes full opened or closed,
**characterized in that** the apparatus is further provided with a switch (SW3) which actuates conjointly with the manual operation of the power-window switch (SW1, SW2) and disconnects a drive control circuit (1) of latching the window-closing relay (RY2) energized in the auto-latching circuit (2) to make a coil of the window-closing relay (RY2) short-circuited.

2. A power window apparatus being capable of opening or closing a window by manual operation of a power-window switch (SW1, SW2) in a window-opening or closing direction, said operation energizing a window-opening relay (RY1) or a window-closing relay (RY2) to drive a motor (M) of a power-window mechanism into forward or reverse rotation for opening or closing the window during the manual operation and by temporary automatic operation of the power-window switch (SW1, SW2) in the window-opening or closing direction, said operation causing a control unit (4) to hold the window-opening relay (RY1) or the window-closing relay (RY2) in the energized state to keep the forward or reverse rotation of the motor,
**characterized in that** the apparatus is further provided with a switch (SW3) which actuates conjointly with the manual operation of the power-window switch (SW1, SW2) and disconnects a drive control circuit (1) of latching the window-closing relay (RY2) energized in the control unit (4) to make a coil of the window-closing relay (RY2) short-circuited.

3. A power window apparatus according to claim 2, wherein said temporary automatic operation causes the control unit (4) to hold the window-opening relay (RY1) or the window-closing relay (RY2) in the energized state (Lo) to keep the forward or reverse rotation of the motor (M) until the window becomes fully opened or closed.

## Patentansprüche

1. Fensterantriebsvorrichtung, die in der Lage ist, ein Fenster durch manuelle Betätigung eines Fensterantriebsschalters (SW1, SW2) in Fensteröffnungs- oder Schließrichtung zu öffnen oder zu schließen, wobei die Betätigung ein Fensteröffnungsrelais (RY1) oder ein Fensterschließrelais (RY2) erregt, um einen Motor (M) eines Fensterantriebsmechanismus vorwärts oder rückwärts drehend anzutreiben, um das Fenster während der manuellen Betätigung zu öffnen oder zu schließen, sowie durch temporäre automatische Betätigung des Fensterantriebsschalters (SW1, SW2) in der Fensteröffnungs- oder Schließrichtung, wobei die Betätigung bewirkt, dass eine Dauerautomatik-Schaltung (2) eingeschaltet wird, um das Fensteröffnungsrelais (RY1) oder das Fensterschließrelais (RY2) in dem erregten Zustand zu halten, um die Vorwärts- oder Rückwärtsbewegung des Motors fortzusetzen, bis das Fenster vollständig geöffnet oder geschlossen wird,
**dadurch gekennzeichnet, dass** die Vorrichtung ferner mit einem Schalter (SW3) versehen ist, der gemeinsam mit der manuellen Betätigung des Fensterantriebsschalters (SW1, SW2) arbeitet und eine Treibersteuerschaltung (1) zum Erregthalten des Fensterschließrelais (RY2) in der Dauerautomatikschaltung (2) abtrennt, um eine Wicklung des Fensterschließrelais (RY2) kurzzuschließen.

2. Fensterantriebsvorrichtung, die in der Lage ist, ein Fenster durch manuelle Betätigung eines Fensterantriebsschalters (SW1, SW2) in Fensteröffnungs- oder Schließrichtung zu öffnen oder zu schließen, wobei die Betätigung ein Fensteröffnungsrelais (RY1) oder ein Fensterschließrelais (RY2) erregt, um einen Motor (M) eines Fensterantriebsmechanismus vorwärts oder rückwärts drehend anzutreiben, um das Fenster während der manuellen Betätigung zu öffnen oder zu schließen, sowie durch temporäre automatische Betätigung des Fensterantriebsschalters (SW1, SW2) in der Fensteröffnungs- oder Schließrichtung, wobei die Betätigung bewirkt, dass eine Steuereinheit (4) das Fensteröffnungsrelais (RY1) oder das Fensterschließrelais (RY2) im erregten Zustand hält, um die Vorwärts- oder Rückwärtsbewegung des Motors fortzusetzen,
**dadurch gekennzeichnet, dass** die Vorrichtung ferner mit einem Schalter (SW3) versehen ist, der gemeinsam mit der manuellen Betätigung des Fensterantriebsschalters (SW1, SW2) arbeitet und eine Treibersteuerschaltung (1) zum Erregthalten des Fensterschließrelais (RY2) in der Steuereinheit (4) abtrennt,um eine Wicklung des Fensterschließrelais (RY2) kurzzuschließen.

3. Fensterantriebsvorrichtung nach Anspruch 2, worin die temporäre automatische Betätigung bewirkt, dass die Steuereinheit (4) das Fensteröffnungsrelais (RY1) oder das Fensterschließrelais (RY2) in dem erregten Zustand (Lo) hält, um die Vorwärts- oder Rückwärtsdrehung des Motors (M) fortzusetzen, bis das Fenster vollständig geöffnet oder geschlossen wird.

## Revendications

1. Dispositif de vitre électrique pouvant ouvrir ou fermer une vitre par actionnement manuel d'un commutateur de vitre électrique (SW1, SW2) dans une direction d'ouverture ou de fermeture de vitre, ladite opération excitant un relais d'ouverture de vitre (RY1) ou un relais de fermeture de vitre (RY2) pour entraîner un moteur (M) d'un mécanisme de vitre électrique dans une rotation directe ou inverse pour ouvrir ou fermer la vitre lors de l'actionnement manuel et par actionnement automatique temporaire du commutateur de vitre électrique (SW1, SW2) dans le sens d'ouverture ou de fermeture de vitre, ladite opération provoquant l'activation d'un circuit à auto-déclenchement (2) pour maintenir le relais d'ouverture de vitre (RY1) ou le relais de fermeture de vitre (RY2) dans l'état excité afin de maintenir la rotation directe ou inverse du moteur jusqu'à ce que la vitre soit complètement ouverte ou fermée, **caractérisé en ce que** le dispositif est muni, de plus, d'un commutateur (SW3) qui agit conjointement à l'actionnement manuel du commutateur de vitre électrique (SW1, SW2) et déconnecte un circuit de commande d'entraînement (1) de déclenchement du relais de fermeture de vitre (RY2) excité dans le circuit à auto-déclenchement (2) pour mettre en court-circuit un bobinage du relais de fermeture de vitre (RY2).

2. Dispositif de vitre électrique pouvant ouvrir ou fermer une vitre par actionnement manuel d'un commutateur de vitre électrique (SW1, SW2) dans le sens d'ouverture ou de fermeture de la vitre, ladite opération excitant un relais d'ouverture de vitre (RY1) ou un relais de fermeture de vitre (RY2) pour entraîner un moteur (M) d'un mécanisme de vitre électrique dans une rotation directe ou inverse pour ouvrir ou fermer la vitre lors de l'actionnement manuel et par actionnement automatique temporaire du commutateur de vitre électrique (SW1, SW2) dans le sens d'ouverture ou de fermeture de la vitre, ladite opération provoquant le maintien du relais d'ouverture de vitre (RY1) ou du relais de fermeture de vitre (RY2) par une unité de commande (4) dans l'état excité pour maintenir la rotation directe ou inverse du moteur, **caractérisé en ce que** le dispositif est muni, de plus, d'un commutateur (SW3) qui agit conjointement à l'actionnement manuel du commutateur de vitre électrique (SW1, SW2) et déconnecte un circuit de commande d'entraînement (1) de déclenchement du relais de fermeture de vitre (RY2) excité dans l'unité de commande (4) pour mettre en court-circuit un bobinage du relais de fermeture de vitre (RY2).

3. Dispositif de vitre électrique selon la revendication 2, dans lequel ledit actionnement automatique temporaire amène l'unité de commande (4) à maintenir le relais d'ouverture de vitre (RY1) ou le relais de fermeture de vitre (RY2) dans l'état excité (LO) pour maintenir la rotation directe ou inverse du moteur (M) jusqu'à ce que la vitre soit complètement ouverte ou fermée.
